# EUROPEAN PATENT APPLICATION

(11) **EP 4 641 852 A1**
(43) Date of publication of application: **29.10.2025**
(21) Application number: 24172088.7
(22) Date of filing: 24.04.2024
(51) Int. Cl.: H02B 1/56, H02B 13/035

(54) **THERMAL BRIDGE BETWEEN HEAT EXCHANGERS FOR SWITCHGEAR COOLING**

(71) Applicant: ABB SCHWEIZ AG, 5400 Baden (CH)
(72) Inventor: NOVAK, Ondrej, 691 06 Velké Pavlovice (CZ); SOLOGUBENKO, Oleksandr, 8906 Bonstetten (CH)
(74) Representative: Maiwald GmbH

(57) **Abstract**

The present invention relates to a cooling system (100) for an electrical sub-station or switchgear, the cooling system comprising:
- a first heat exchanger (20);
- a second heat exchanger (30); and
- a thermal bridge (40);
wherein the first heat exchanger is configured to be mounted to a first part of the electrical sub-station or switchgear to transfer heat from the first part of the electrical sub-station or switchgear to an environment external to the first part of the electrical sub-station or switchgear;
wherein the second heat exchanger is configured to be mounted to a second part of the electrical sub-station or switchgear to transfer heat from the second part of the electrical sub-station or switchgear to an environment external to the second part of the electrical sub-station or switchgear;
wherein the thermal bridge is configured to be in thermal connection with the first heat exchanger;
wherein the thermal bridge is configured to be in thermal connection with the second heat exchanger; and
wherein the thermal bridge is configured to conduct heat between the first heat exchanger and the second heat exchanger.

## Description

### FIELD OF THE INVENTION

The present invention relates to a thermal bridge between heat exchangers for switchgear cooling.

### BACKGROUND OF THE INVENTION

Switchgear, such as Gas Insulated Switchgear (GIS), generally have several compartments, such as a circuit breaker compartment, cable connection compartment, one or more busbar compartments, and other component compartments.

Heat is generated in these compartments due to joule heating as current flows through conductors, and this heat must be extracted. Different compartments can be at different temperatures at different times. Compartments can have a very high heat load, and thus a high temperature at one time, and a lower heat load, and thus a lower temperature at another time.

Heat exchangers, such as heat sinks, coolers, gas coolers, cooling towers etc are mounted to compartments or to parts/components within compartments to extract heat from the compoartment to cool the compartment. Howevever, the heat exchangers needs to be designed for the maximum heat load, and thus the maximum temperature that the compartment is being driven toward, even if this situation occurs infrequently.

Thus, large and expensive heat exchangers are required.

There is a need to improve this situation.

### SUMMARY OF THE INVENTION

Therefore, it would be advantageous to provide an improved way of cooling switchgear.

The object of the present invention is solved with the subject matter of the independent claims, wherein further embodiments are incorporated in the dependent claims.

In a first aspect, there is provided a switchgear (10), comprising:
- a first heat exchanger (20);
- a second heat exchanger (30); and
- a thermal bridge (40).

The first heat exchanger is configured to transfer heat from the switchgear to an environment external to the switchgear. The second heat exchanger is configured to transfer heat from the switchgear to the environment external to the switchgear. The thermal bridge is in thermal connection with the first heat exchanger. The thermal bridge is in thermal connection with the second heat exchanger. The thermal bridge is configured to conduct heat between the first heat exchanger and the second heat exchanger.

In an example, the first heat exchanger comprises a heat sink, a thermo-syphon, a cooler, a gas cooler, or a cooling tower.

In an example, the second heat exchanger comprises a heat sink, a thermo-syphon, a cooler, a gas cooler, or a cooling tower.

In an example, the first heat exchanger is configured to be held at ground potential.

In an example, the second heat exchanger is configured to be held at ground potential.

In an example, the thermal bridge comprises a heat pipe, a vapour chamber, a beam of thermally conductive material, a sheet of thermally conductive material, a metal beam, or a metal sheet.

In an example, the second heat exchanger is configured to be held at high potential, and wherein the thermal bridge is configured to electrically insulate the first heat exchanger from the second heat exchanger.

In an example, the thermal bridge comprises a beam of thermally conductive material, a sheet of thermally conductive material, a thermally conductive beam of plastic material, a thermally conductive sheet of plastic material, a thermally conductive beam of ceramic material, a thermally conductive sheet of ceramic material.

In an example, the plastic material has a thermal conductivity of approximately 8W/mK.

In an example, the plastic material comprises polyamide.

In an example, the plastic material comprises heat stabilized polyamide.

In an example, the plastic material comprises heat stabilized polyamide 66 grade.

In an example, the plastic material comprises polyamide reinforced with carbon fibre / glass fibre.

In an example, the plastic material comprises LUVOCOM^{®}1800-9333/WT.

In an example, the ceramic material has a thermal conductivity of approximately 90W/mK.

In an example, the ceramic material has an insulation of approximately 63 KV/mm.

In an example, the thermal bridge comprises ANB-90 from JUCI Technology Co Ltd.

In an example, a connection (50) between the first heat exchanger and the thermal bridge comprises a welded connection, a soldered connection, a temperature-pressed connection, a screw-pressed connection, a pressed connection.

In an example, a connection (60) between the second heat exchanger and the thermal bridge comprises a welded connection, a soldered connection, a temperature-pressed connection, a screw-pressed connection, a pressed connection.

In an example, the switchgear comprises a first compartment (70) and a second compartment (80). The first heat exchanger is configured to transfer heat from the first compartment to the environment external to the switchgear. The second heat exchanger is configured to transfer heat from the second compartment to the environment external to the switchgear.

In an example, the first heat exchanger is in thermal connection with a frame of the switchgear and/or a component or part within the switchgear and/or a surface of a compartment of the switchgear.

In an example, the second heat exchanger is in thermal connection with a frame of the switchgear and/or a component or part within the switchgear and/or a surface of the compartment of the switchgear and/or a surface of a second compartment of the switchgear.

In a second aspect, there is provided a cooling system (100) for an electrical sub-station (200) or switchgear (10), the cooling system comprising:
- a first heat exchanger (20);
- a second heat exchanger (30); and
- a thermal bridge (40).

The first heat exchanger is configured to be mounted to a first part of the electrical sub-station or switchgear to transfer heat from the first part of the electrical sub-station or switchgear to an environment external to the first part of the electrical sub-station or switchgear. The second heat exchanger is configured to be mounted to a second part of the electrical sub-station or switchgear to transfer heat from the second part of the electrical sub-station or switchgear to an environment external to the second part of the electrical sub-station or switchgear. The thermal bridge is configured to be in thermal connection with the first heat exchanger. The thermal bridge is configured to be in thermal connection with the second heat exchange. The thermal bridge is configured to conduct heat between the first heat exchanger and the second heat exchanger.

In an example, the first heat exchanger comprises a heat sink, a thermo-syphon, a cooler, a gas cooler, or a cooling tower.

In an example, wherein the second heat exchanger comprises a heat sink, a thermo-syphon, a cooler, a gas cooler, or a cooling tower.

In an example, the first heat exchanger is configured to be held at ground potential.

In an example, the second heat exchanger is configured to be held at ground potential.

In an example, the thermal bridge comprises a heat pipe, a vapour chamber, a beam of thermally conductive material, a sheet of thermally conductive material, a metal beam, or a metal sheet.

In an example, the second heat exchanger is configured to be held at high potential, and the thermal bridge is configured to electrically insulate the first heat exchanger from the second heat exchanger.

In an example, the thermal bridge comprises a beam of thermally conductive material, a sheet of thermally conductive material, a thermally conductive beam of plastic material, a thermally conductive sheet of plastic material, a thermally conductive beam of ceramic material, a thermally conductive sheet of ceramic material.

In an example, the plastic material has a thermal conductivity of approximately 8W/mK.

In an example, the plastic material comprises LUVOCOM^{®}1800-9333/WT.

In an example, the ceramic material has a thermal conductivity of approximately 90W/mK.

In an example, the ceramic material has an insulation of approximately 63 KV/mm.

In an example, the thermal bridge comprises ANB-90 from JUCI Technology Co Ltd.

In an example, the thermal bridge and the first heat exchanger are configured to be thermally connected (50) via a welded connection, a soldered connection, a temperature-pressed connection, a screw-pressed connection, a pressed connection.

In an example, the thermal bridge and the second heat exchanger are configured to be thermally connected (60) via a welded connection, a soldered connection, a temperature-pressed connection, a screw-pressed connection, a pressed connection.

In an example, the first part of the electrical sub-station or switchgear comprises a first compartment (70) of the electrical sub-station or switchgear.

In an example, the second part of the electrical sub-station or switchgear comprises a second compartment (80) of the electrical sub-station or switchgear.

In an example, the first part of the electrical sub-station or switchgear comprises a frame of the electrical sub-station or switchgear.

In an example, the second part of the electrical sub-station or switchgear comprises a frame of the electrical sub-station or switchgear.

In an example, the first part of the electrical sub-station or switchgear comprises a component or part within the electrical sub-station or switchgear.

In an example, the second part of the electrical sub-station or switchgear comprises a component or part within the electrical sub-station or switchgear.

In an example, the first part of the electrical sub-station or switchgear comprises a surface of a compartment the electrical sub-station or switchgear.

In an example, the second part of the electrical sub-station or switchgear comprises a surface of the compartment of the electrical sub-station or switchgear or a surface of second compartment of the electrical sub-station or switchgear.

In an example, the first part of the electrical sub-station comprises a first switchgear (300) or a first panel (300).

In an example, the second part of the electrical sub-station comprises a second switchgear (400) or a second panel (400).

In an example, the first part of the electrical sub-station comprises a surface of a compartment of a first switchgear or a surface of a compartment of a first panel.

In an example, the second part of the electrical sub-station comprises a surface of a compartment of a second switchgear or a surface of a compartment of a second panel.

In an example, the first part of the electrical sub-station comprises a component or part within a compartment of a first switchgear or a component or part within a compartment of a first panel.

In an example, the second part of the electrical sub-station comprises a component or part within a compartment of a second switchgear or a component or part within a compartment of a second panel.

### BRIEF DESCRIPTION OF THE DRAWINGS

Exemplary embodiments will be described in the following with reference to the following drawing:
Fig. 1 shows an example of a cooling system for an electrical sub-station or switchgear, where a thermal bridge in the form of a heat pipe is connecting two cooling towers;
Fig. 2 shows an example of a cooling system for an electrical sub-station or switchgear, where a thermal bridge in the form of a common sheet metal plate is connecting two cooling towers;
Fig. 3 shows an example of a switchgear having a cooling system, where the thermal bridge 40 is represented by the dashed line with arrows pointing from the heat exchanger 20 at a higher temperature to the heat exchanger 30 at a lower temperature; and
Fig. 4 shows an example of an electrical sub-station that has two switchgear or panels, with a cooling system operating between them.

### DETAILED DESCRIPTION OF EMBODIMENTS

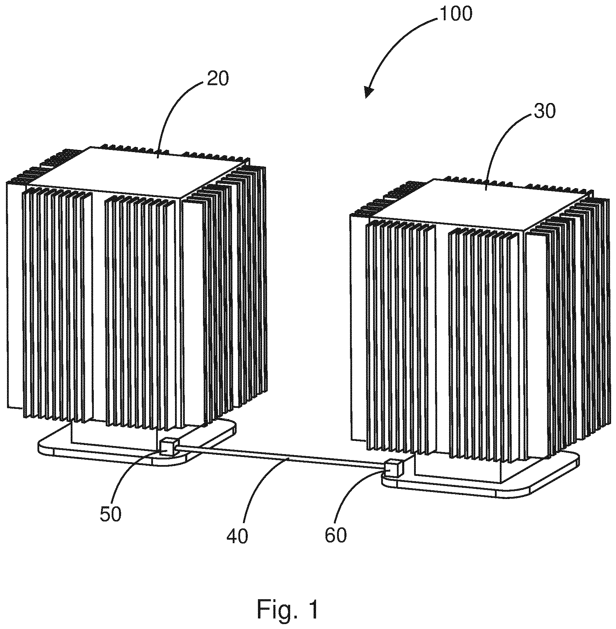

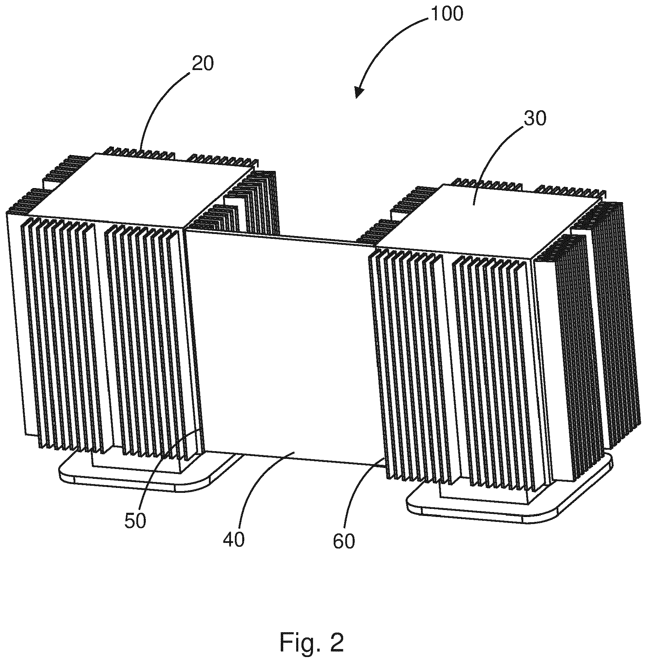

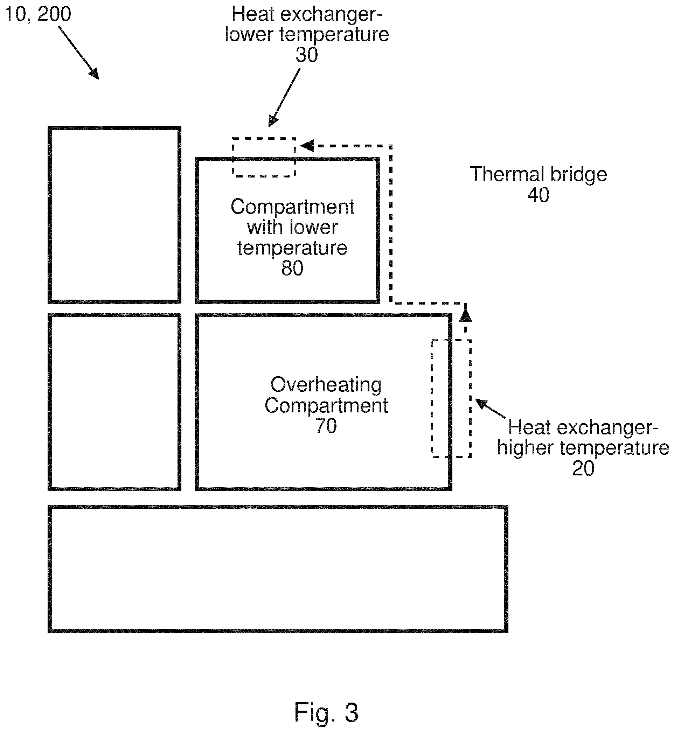

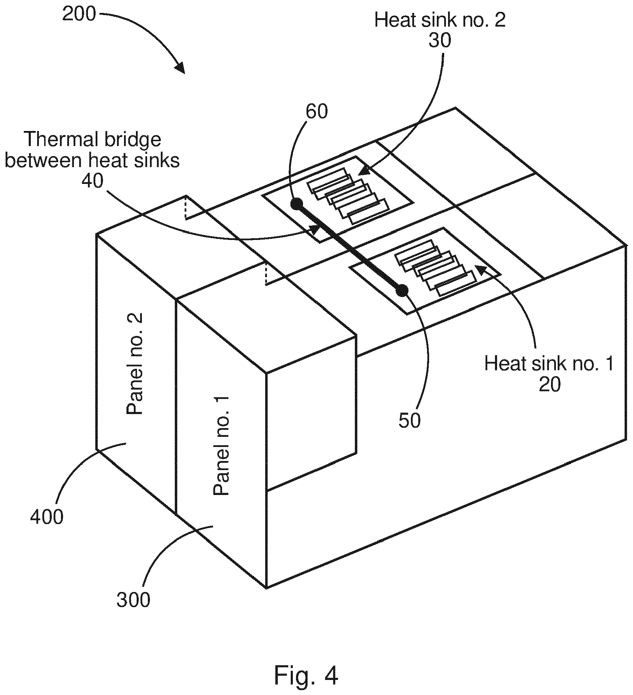

Figs. 1-4 relate to a cooling system that can be applied to a compartment of a switchgear, applied to different compartments of a switchgear, or applied to different switchgear.

The new development came about from a realisation from the inventors that the current way that a switchgear or a substation that contains several switchgear panels is cooled could be improved upon. Normally each switchgear or panel is made from busbar compartment, circuit breaker compartment and other compartments. Some compartments have a higher heat load than other compartments, but the situation can change where a compartment that had a higher heat load than a different compartment could then have a lower heat load than the other compartment. For example, when a system is a double-busbar system there are two busbar compartments, where only one is active, but the one that is active can change. Thus, the gas and components in each compartment do not have the same temperature, but have different temperatures across compartments and indeed in a same compartment the gas and components can have different temperatures. This is the case among compartments in the same switchgear/panel as well as among all switchgear/panels in substation. Up until now, all compartments required a heat exchanger designed for the maximum heat load that the compartment could experience and thus the highest temperature that the compartment would be driven towards with no heat exchanger. Thus, the heat exchangers are large and expensive and frequently the heat load a compartment is experiencing is less than that commensurate with the design of the heat exchanger that is being used to cool the compartment. Thus, the inventors realised that some compartments, via their heat exchangers, have spare ability to dissipate heat while others might be driven towards their maximum temperature and even overheating. As discussed above, usually each compartment has at least one or more heat exchangers to help remove heat like coolers, heat sinks, gas coolers and cooling towers. A difference in temperature of these heat exchanger (cooling devices) can be higher than 15K in the same panel and much higher in case of double-busbar. The inventors realised that the heat exchangers could be configured to share the cooling capability, through utilization of a thermal bridge connecting them.

Thus, the inventors realised that compartments of a switchgear have their own heat exchangers, but not all heat exchangers are utilized to their maximum potential. By using a thermal bridge to connect two heat exchangers, that can be at ground potential enabling a thermal and electrically conductive thermal bridge made of metal for example to be used, enables the heat dissipation capacity of the heat exchangers to be shared. This means that the heat load of overheating compartments is in effect shared with a colder compartment leading to a reduced temperature of the hotter compartment, and where if the colder of the two compartments becomes the hotter, the cooling system continues to operate.

The following relates to a single thermal bridge connecting two heat exchangers, but the new development described here can relate to a plurality of thermal bridges connecting two heat exchangers, and indeed a plurality of thermal bridges connecting a plurality of heat exchangers. Thus, there could be in effect a chain of heat exchangers that are connected by heat exchangers, where for example adjacent heat exchangers are connected by a single thermal bridge. Also, there could be a number of heat exchanges, where each heat exchanger is connected to two other heat exchangers by two thermal bridges, or indeed where each heat exchanger is connected to three other heat exchangers by three thermal bridges.

Continuing with the description, that has concentrated on two heat exchangers connected by a thermal bridge:
The thermal bridge is formed between an overheating compartment and a compartment with spare ability to dissipate heat. The thermal bridge is created by connecting heat exchangers, coolers, gas coolers, cooling towers or any other components of the compartment that, in a simple embodiment, is not under electric potential within one panel or amongst neighbouring panels or any panels within the substation - thus all at ground potential and the thermal bridge can be a thermal conductor and electrical connector such as a metal beam or sheet. However, a thermal bridge in the form of a thermally conductive plastic or ceramic, that is not electrically conductive, can be utilized enabling one of the heat exchangers to be at a different potential to other - for example one at ground potential and one at high voltage.

To form the thermal bridge the following devices can be used: heat pipe, vapor chamber, sheet metal plate or plates from heat conductive material, beam with any shape from heat conductive material. Heat will be conducted in a direction of the heat gradient through the thermal bridge from the hotter compartment towards the cooler compartment. One advantage of this system is that thermal bridge can work in both directions, making the system self-regulatory in the situation of a change in loadings and or malfunction of each compartment.

Then heat will be dissipated by the cooler, gas cooler, heat exchanger or cooling towers with a lower temperature from the pair or from the system in the case of multiple connections. Thus, the heat is re-distributed from a heat exchanger of a hotter compartments the new cooling apparatus/system towards a colder heat exchanger of another compartment or panel. This results in a more equal distribution of heat amongst panels or compartments, while better utilizing already fitted cooling devices, increasing an overall ability of the substation to dissipate heat, while lowering peak temperatures in problematic compartments. Also, with the thermal bridge leading to the sharing of heat load across the heat exchangers of different compartments, the heat exchangers can be smaller and less expensive, because each does not then have to deal with the same high heat load alone - it is now shared with a heat exchanger of another compartment.

Specific embodiments are now described with respect to Figs. 1-4.

In an example a switchgear 10 comprises a first heat exchanger 20, a second heat exchanger 30, and a thermal bridge 40. The first heat exchanger is configured to transfer heat from the switchgear to an environment external to the switchgear. The second heat exchanger is configured to transfer heat from the switchgear to the environment external to the switchgear. The thermal bridge is in thermal connection with the first heat exchanger. The thermal bridge is in thermal connection with the second heat exchanger. The thermal bridge is configured to conduct heat between the first heat exchanger and the second heat exchanger.

In an example, the first heat exchanger comprises a heat sink, a thermo-syphon, a cooler, a gas cooler, or a cooling tower.

In an example, the second heat exchanger comprises a heat sink, a thermo-syphon, a cooler, a gas cooler, or a cooling tower.

In an example, the first heat exchanger is configured to be held at ground potential.

In an example, the second heat exchanger is configured to be held at ground potential.

In an example, the thermal bridge comprises a heat pipe, a vapour chamber, a beam of thermally conductive material, a sheet of thermally conductive material, a metal beam, or a metal sheet.

In an example, the second heat exchanger is configured to be held at high potential, and wherein the thermal bridge is configured to electrically insulate the first heat exchanger from the second heat exchanger.

In an example, the thermal bridge comprises a beam of thermally conductive material, a sheet of thermally conductive material, a thermally conductive beam of plastic material, a thermally conductive sheet of plastic material, a thermally conductive beam of ceramic material, a thermally conductive sheet of ceramic material.

In an example, the plastic material has a thermal conductivity of approximately 8W/mK.

In an example, the plastic material comprises polyamide.

In an example, the plastic material comprises heat stabilized polyamide.

In an example, the plastic material comprises heat stabilized polyamide 66 grade.

In an example, the plastic material comprises polyamide reinforced with carbon fibre / glass fibre.

In an example, the plastic material comprises LUVOCOM^{®}1800-9333/WT.

In an example, the ceramic material has a thermal conductivity of approximately 90W/mK.

In an example, the ceramic material has an insulation of approximately 63 KV/mm.

In an example, the thermal bridge comprises ANB-90 from JUCI Technology Co Ltd.

In an example, a connection 50 between the first heat exchanger and the thermal bridge comprises a welded connection, a soldered connection, a temperature-pressed connection, a screw-pressed connection, a pressed connection.

In an example, a connection 60 between the second heat exchanger and the thermal bridge comprises a welded connection, a soldered connection, a temperature-pressed connection, a screw-pressed connection, a pressed connection.

In an example, the switchgear comprises a first compartment 70 and a second compartment 80. The first heat exchanger is configured to transfer heat from the first compartment to the environment external to the switchgear. The second heat exchanger is configured to transfer heat from the second compartment to the environment external to the switchgear.

In an example, the first heat exchanger is in thermal connection with a frame of the switchgear and/or a component or part within the switchgear and/or a surface of a compartment of the switchgear.

In an example, the second heat exchanger is in thermal connection with a frame of the switchgear and/or a component or part within the switchgear and/or a surface of the compartment of the switchgear and/or a surface of a second compartment of the switchgear.

In an example a cooling system 100, for an electrical sub-station 200 or switchgear 10, comprises a first heat exchanger 20, a second heat exchanger 30, and a thermal bridge 40. The first heat exchanger is configured to be mounted to a first part of the electrical sub-station or switchgear to transfer heat from the first part of the electrical sub-station or switchgear to an environment external to the first part of the electrical sub-station or switchgear. The second heat exchanger is configured to be mounted to a second part of the electrical sub-station or switchgear to transfer heat from the second part of the electrical sub-station or switchgear to an environment external to the second part of the electrical sub-station or switchgear. The thermal bridge is configured to be in thermal connection with the first heat exchanger. The thermal bridge is configured to be in thermal connection with the second heat exchange. The thermal bridge is configured to conduct heat between the first heat exchanger and the second heat exchanger.

In an example, the first heat exchanger comprises a heat sink, a thermo-syphon, a cooler, a gas cooler, or a cooling tower.

In an example, wherein the second heat exchanger comprises a heat sink, a heat pipe, a thermo-syphon, a cooler, a gas cooler, or a cooling tower.

In an example, the first heat exchanger is configured to be held at ground potential.

In an example, the second heat exchanger is configured to be held at ground potential.

In an example, the thermal bridge comprises a heat pipe, a vapour chamber, a beam of thermally conductive material, a sheet of thermally conductive material, a metal beam, or a metal sheet.

In an example, the second heat exchanger is configured to be held at high potential, and the thermal bridge is configured to electrically insulate the first heat exchanger from the second heat exchanger.

In an example, the thermal bridge comprises a beam of thermally conductive material, a sheet of thermally conductive material, a thermally conductive beam of plastic material, a thermally conductive sheet of plastic material, a thermally conductive beam of ceramic material, a thermally conductive sheet of ceramic material.

In an example, the plastic material has a thermal conductivity of approximately 8W/mK.

In an example, the plastic material comprises LUVOCOM^{®}1800-9333/WT.

In an example, the ceramic material has a thermal conductivity of approximately 90W/mK.

In an example, the ceramic material has an insulation of approximately 63 KV/mm.

In an example, the thermal bridge comprises ANB-90 from JUCI Technology Co Ltd.

In an example, the thermal bridge and the first heat exchanger are configured to be thermally connected 50 via a welded connection, a soldered connection, a temperature-pressed connection, a screw-pressed connection, a pressed connection.

In an example, the thermal bridge and the second heat exchanger are configured to be thermally connected 60 via a welded connection, a soldered connection, a temperature-pressed connection, a screw-pressed connection, a pressed connection.

In an example, the first part of the electrical sub-station or switchgear comprises a first compartment 70 of the electrical sub-station or switchgear.

In an example, the second part of the electrical sub-station or switchgear comprises a second compartment 80 of the electrical sub-station or switchgear.

In an example, the first part of the electrical sub-station or switchgear comprises a frame of the electrical sub-station or switchgear.

In an example, the second part of the electrical sub-station or switchgear comprises a frame of the electrical sub-station or switchgear.

In an example, the first part of the electrical sub-station or switchgear comprises a component or part within the electrical sub-station or switchgear.

In an example, the second part of the electrical sub-station or switchgear comprises a component or part within the electrical sub-station or switchgear.

In an example, the first part of the electrical sub-station or switchgear comprises a surface of a compartment the electrical sub-station or switchgear.

In an example, the second part of the electrical sub-station or switchgear comprises a surface of the compartment of the electrical sub-station or switchgear or a surface of second compartment of the electrical sub-station or switchgear.

In an example, the first part of the electrical sub-station comprises a first switchgear 300 or a first panel 300.

In an example, the second part of the electrical sub-station comprises a second switchgear 400 or a second panel 400.

In an example, the first part of the electrical sub-station comprises a surface of a compartment of a first switchgear or a surface of a compartment of a first panel.

In an example, the second part of the electrical sub-station comprises a surface of a compartment of a second switchgear or a surface of a compartment of a second panel.

In an example, the first part of the electrical sub-station comprises a component or part within a compartment of a first switchgear or a component or part within a compartment of a first panel.

In an example, the second part of the electrical sub-station comprises a component or part within a compartment of a second switchgear or a component or part within a compartment of a second panel.

Thus, the new development relates to a thermal bridge that conducts heat from a hotter heat exchanger that is designed to remove heat from a compartment (e.g. gas tank) (the heat exchanger being for example a gas cooler, heat sink, cooling tower, heat exchanger) due to a temperature difference ( easily 16K, in specific cases more ) to colder heat exchanger fitted to another compartment. This increases the temperature of the colder heat sink, but because it has spare capability to dissipate heat, it's not an issue. However, the temperature of the hotter heat sink will decrease, which improves its ability to remove heat from the overheating compartment and leads to a decrease in the temperature in this compartment.

The thermal bridge can be formed by multiple means, for example a heat pipe, vapor chamber, sheet metal plate or beam from heat conductive material. For a double busbar system, and indeed for any system where each of two connected heat exchangers can periodically be the hotter with the other being the colder, an advantage is that thermal bridge can work in both ways. In this way, the inactive busbar system helps to cool the active one and once it changes, the thermal bridge conducts heat in the opposite direction and again helps remove heat from the active one via the inactive one.

This thermal bridge can be useful even in a single switchgear/panel and in neighboring panels for cases where there is significant enough temperature difference between heat sinks. For a single switchgear/panel air flow carries with itself heat from a compartment that the air hits first, which than limits the ability of the hot air to cool a second compartment that the air hits. With the thermal bridge some heat is removed from the airflow without limiting its mass flow rate, meaning the cooling ability of the air is increased with respect to the second compartment along the flow path.

### Reference Numerals

- 10: Switchgear
- 20: First heat exchanger
- 30: second heat exchanger
- 40: Thermal bridge
- 50: Connection between the first heat exchanger and the
- thermal bridge 60: Connection between the second heat exchanger and
- the thermal bridge 70: First compartment
- 80: Second compartment
- 100: Cooling system
- 200: Electrical sub-station
- 300: First switchgear / first panel
- 400: Second switchgear / second panel

## Claims

1. A switchgear (10), comprising:
- a first heat exchanger (20);
- a second heat exchanger (30); and
- a thermal bridge (40);
wherein the first heat exchanger is configured to transfer heat from the switchgear to an environment external to the switchgear;
wherein the second heat exchanger is configured to transfer heat from the switchgear to the environment external to the switchgear;
wherein the thermal bridge is in thermal connection with the first heat exchanger;
wherein the thermal bridge is in thermal connection with the second heat exchanger; and
wherein the thermal bridge is configured to conduct heat between the first heat exchanger and the second heat exchanger.

2. Switchgear according to claim 1, wherein the first heat exchanger comprises a heat sink, a thermo-syphon, a cooler, a gas cooler, or a cooling tower.

3. Switchgear according to any of claims 1 to 2, wherein the second heat exchanger comprises a heat sink, a thermo-syphon, a cooler, a gas cooler, or a cooling tower.

4. Switchgear according to any of claims 1-3, wherein the first heat exchanger is configured to be held at ground potential.

5. Switchgear according to any of claims 1-4, wherein the second heat exchanger is configured to be held at ground potential.

6. Switchgear according to any of claims 1 to 5, wherein the thermal bridge comprises a heat pipe, a vapour chamber, a beam of thermally conductive material, a sheet of thermally conductive material, a metal beam, or a metal sheet.

7. Switchgear according to any of claims 1-4, wherein the second heat exchanger is configured to be held at high potential, and wherein the thermal bridge is configured to electrically insulate the first heat exchanger from the second heat exchanger.

8. Switchgear according to claims 7, wherein the thermal bridge comprises a beam of thermally conductive material, a sheet of thermally conductive material, a thermally conductive beam of plastic material, a thermally conductive sheet of plastic material, a thermally conductive beam of ceramic material, a thermally conductive sheet of ceramic material.

9. Switchgear according to any of claims 1-8, wherein a connection (50) between the first heat exchanger and the thermal bridge comprises a welded connection, a soldered connection, a temperature-pressed connection, a screw-pressed connection, a pressed connection.

10. Switchgear according to any of claims 1-9, wherein a connection (60) between the second heat exchanger and the thermal bridge comprises a welded connection, a soldered connection, a temperature-pressed connection, a screw-pressed connection, a pressed connection.

11. Switchgear according to any of claims 1-10, wherein the switchgear comprises a first compartment (70) and a second compartment (80), and wherein the first heat exchanger is configured to transfer heat from the first compartment to the environment external to the switchgear, and wherein the second heat exchanger is configured to transfer heat from the second compartment to the environment external to the switchgear.

12. Switchgear according to any of claims 1-11, wherein the first heat exchanger is in thermal connection with a frame of the switchgear and/or a component or part within the switchgear and/or a surface of a compartment of the switchgear, and wherein the second heat exchanger is in thermal connection with a frame of the switchgear and/or a component or part within the switchgear and/or a surface of the compartment of the switchgear and/or a surface of a second compartment of the switchgear.

13. A cooling system (100) for an electrical sub-station (200) or switchgear (10), the cooling system comprising:
- a first heat exchanger (20);
- a second heat exchanger (30); and
- a thermal bridge (40);
wherein the first heat exchanger is configured to be mounted to a first part of the electrical sub-station or switchgear to transfer heat from the first part of the electrical sub-station or switchgear to an environment external to the first part of the electrical sub-station or switchgear;
wherein the second heat exchanger is configured to be mounted to a second part of the electrical sub-station or switchgear to transfer heat from the second part of the electrical sub-station or switchgear to an environment external to the second part of the electrical sub-station or switchgear;
wherein the thermal bridge is configured to be in thermal connection with the first heat exchanger;
wherein the thermal bridge is configured to be in thermal connection with the second heat exchanger; and
wherein the thermal bridge is configured to conduct heat between the first heat exchanger and the second heat exchanger.

14. System according to claim 13, wherein the first heat exchanger comprises a heat sink, a thermo-syphon, a cooler, a gas cooler, or a cooling tower; and wherein the second heat exchanger comprises a heat sink, a thermo-syphon, a cooler, a gas cooler, or a cooling tower.

15. System according to any of claims 13 to 15, wherein the thermal bridge comprises a heat pipe, a vapour chamber, a beam of thermally conductive material, a sheet of thermally conductive material, a metal beam, or a metal sheet.
